# EUROPÄISCHE PATENTANMELDUNG

(11) **EP 4 283 761 A1**
(43) Veröffentlichungstag der Anmeldung: **29.11.2023**
(21) Anmeldenummer: 23172798.3
(22) Anmeldetag: 11.05.2023
(51) Int. Cl.: H01M 10/613, E01C 19/30, H01M 10/623, H01M 10/633, H01M 10/6563, H02J 7/00

(54) **AKKUBETRIEBENE ARBEITSMASCHINE MIT BEDARFSORIENTIERTER KÜHLUNG UND KONDITIONIERUNG DES AKKUS**

(30) Priorität: 25.05.2022 DE 102022113284
(71) Anmelder: Wacker Neuson Produktion GmbH & Co. KG, 85084 Reichertshofen (DE)
(72) Erfinder: GALLE, Stefan, 84034 Landshut (DE); DILLER, Patrick, 86558 Hohenwart (DE); WEISKOPF, Alto, 85250 Altomünster (DE); HARTMANN, Robert, 80805 München (DE); GLANZ, Christian, 85221 Dachau (DE); KOLLMANN, Markus, 4072 Alkoven (AT); HACKL, Christopher, 86558 Freinhausen (DE)
(74) Vertreter: Müller Hoffmann & Partner

(57) **Zusammenfassung**

Es wird eine Arbeitsmaschine angegeben, mit einer Arbeitsvorrichtung zum Erzeugen einer Arbeitsbewegung; mit einem Elektromotor (5) zum Antreiben der Arbeitsvorrichtung; mit einem elektrischen Energiespeicher (10) zum Versorgen des Elektromotors mit elektrischem Strom; und mit einer Kühlvorrichtung zum Kühlen des Energiespeichers (10); wobei die Kühlvorrichtung wenigstens eine Lüftereinrichtung (15) aufweist, zum Erzeugen eines Kühlluftstroms (16), der über den Energiespeicher (10) führbar ist; wobei wenigstens ein Temperatursensor (26) zum Erfassen einer Temperatur vorgesehen ist; und wobei eine Steuereinrichtung (25) vorgesehen ist, zum Ansteuern der Lüftereinrichtung (15) in Abhängigkeit von der durch den Temperatursensor (26) erfassten Temperatur.

## Beschreibung

Die Erfindung betrifft eine Arbeitsmaschine, insbesondere eine akkubetriebene Arbeitsmaschine, wie einen Rüttelstampfer, eine Rüttelplatte zur Bodenverdichtung, einen Fugenschneider, etc. Weiterhin betrifft die Erfindung Verfahren zum Konditionieren des in der Arbeitsmaschine eingesetzten Akkus.

Bei derartigen Arbeits- bzw. Baumaschinen kommen unterschiedliche Antriebskonzepte zum Einsatz. Während in der Vergangenheit derartige Maschinen weitgehend durch Verbrennungsmotoren angetrieben wurden, setzen sich zunehmend Elektroantriebe durch, bei denen ein Elektromotor durch einen am Gerät vorhandenen Akku und einem zugehörigen Umformer mit elektrischer Energie versorgt wird.

Bei derartigen Maschinen ist an dem als Antriebsmotor dienenden Elektromotor ein Lüfterrad vorgesehen, das im Betrieb des Motors permanent einen Kühlluftstrom erzeugt, der auch zur Kühlung des Akkus und des Umformers genutzt werden kann. Ein Beispiel dafür ist in der DE 10 2010 055 632 A1 beschrieben.

Die Kühlung erfolgt dabei nicht bedarfsorientiert, sondern automatisch während des Betriebs des Elektromotors. Damit werden die Komponenten nur dann gekühlt, wenn der Motor läuft und sich das Gerät somit in Betrieb befindet. Weiterhin werden die Komponenten auch dann gekühlt, wenn kein Kühlbedarf besteht, weil die Komponenten noch keine kritische Temperatur erreicht haben.

Bei derartigen akkubetriebenen Geräten ist es zudem erforderlich, vor einer Inbetriebnahme der Maschine zunächst den Akku über einen an dem Akku vorgesehenen Taster oder Schalter zu aktivieren. Dann besteht für den Bediener innerhalb eines vorgegebenen Zeitraums (z.B. 30 s) die Möglichkeit, den Elektromotor über einen Maschinenschalter anzuschalten und damit die Maschine in Betrieb zu nehmen. Nach dem Abschalten des Elektromotors muss der Akku wieder über den Taster deaktiviert werden.

Die Kühlung der Komponenten erfolgt ausschließlich während des Betriebs des Antriebsmotors, so dass eine Vor- oder Nachkonditionierung bzw. -temperierung des Akkus nicht möglich ist. Wenn der Akku beispielsweise von einem vorangegangenen Lade- bzw. Entladevorgang bereits erwärmt wurde, kann dies vor allem bei Geräten mit höherer Leistungsaufnahme zu einer verkürzten Laufzeit führen, da die maximal zulässige Temperatur des Akkus schneller erreicht wird. Dies kann zu einer erzwungenen Abschaltung der gesamten Maschine oder gar zu einer Schädigung von Komponenten (Akku, Umformer) führen.

Umgekehrt können die in dem während des Motorbetriebs dauerhaft erzeugten Kühlluftstrom angeordneten Komponenten auch dann gekühlt werden, wenn dies bezogen auf die Temperatur der Komponenten noch nicht notwendig ist. Das kann insbesondere bei niedrigen Außentemperaturen dazu führen, dass die Komponenten, vor allem der Akku, für längere Zeit unterhalb ihrer vorgesehenen Betriebstemperatur ("Wohlfühltemperatur") betrieben werden.

Der Einsatz von Lüftern an akkubetriebenen Geräten, sei es durch ein Lüfterrad direkt am Antriebsmotor oder durch einen separaten Lüfter, erhöht den Energiebedarf, da die Lüfter ständig laufen, sobald der Akku aktiviert ist und Strom vom Akku entnommen werden kann.

Der Erfindung liegt die Aufgabe zugrunde, eine Arbeitsmaschine mit verbessertem Thermomanagement durch eine bedarfsgerechte aktive Kühlung und eine Temperatur-Konditionierung anzugeben.

Die Aufgabe wird durch eine Arbeitsmaschine mit den Merkmalen von Anspruch 1 sowie durch eine Arbeitsmaschine mit den Merkmalen des nebengeordneten Anspruchs gelöst. Vorteilhafte Ausgestaltungen sind in den abhängigen Ansprüchen angegeben. Weiterhin werden in den weiteren nebengeordneten Ansprüchen Verfahren zum Vor-Konditionieren und Nach-Konditionieren eines Energiespeichers an einer Arbeitsmaschine angegeben.

Es wird eine Arbeitsmaschine angegeben, mit einer Arbeitsvorrichtung zum Erzeugen einer Arbeitsbewegung, einem Elektromotor zum Antreiben der Arbeitsvorrichtung, einem elektrischen Energiespeicher zum Versorgen des Elektromotors mit elektrischem Strom, und mit einer Kühlvorrichtung zum Kühlen des Energiespeichers, wobei die Kühlvorrichtung wenigstens eine Lüftereinrichtung aufweist, zum Erzeugen eines Kühlluftstroms, der über den Energiespeicher führbar ist, wobei wenigstens ein Temperatursensor zum Erfassen einer Temperatur vorgesehen ist, und wobei eine Steuereinrichtung vorgesehen ist, zum Ansteuern der Lüftereinrichtung in Abhängigkeit von der durch den Temperatursensor erfassten Temperatur.

Bei der Arbeitsmaschine kann es sich insbesondere um eine Baumaschine, wie ein Rüttelstampfer, eine Rüttel- bzw. Vibrationsplatte zur Bodenverdichtung oder ein Fugenschneider zum Schneiden von Asphaltdecken oder Beton handeln.

Die Steuereinrichtung ist in der Lage, die Lüftereinrichtung und damit den Kühlluftstrom zu steuern und insbesondere ein- und auszuschalten. Die Lüftereinrichtung kann einen Lüfter und einen den Lüfter antreibenden Lüftermotor aufweisen, wobei der Lüftermotor insbesondere getrennt von dem eigentlichen Antriebsmotor (Elektromotor) der Arbeitsmaschine vorgesehen sein kann.

Das Ansteuern der Lüftereinrichtung durch die Steuereinrichtung kann insbesondere dadurch erfolgen, dass durch die Steuereinrichtung ein Über- oder Unterschreiten von vorgegebenen Temperaturgrenzwerten überwacht wird. Z.B. kann bei Überschreiten eines vorgegebenen oberen Temperaturgrenzwerts die Lüftereinrichtung eingeschaltet werden, um mit Hilfe des dadurch erzeugten Kühlluftstroms die zu kühlende Komponente, und zwar insbesondere den Energiespeicher (Akku) zu kühlen.

Die Lüftereinrichtung kann dabei auch mehrere Lüfter umfassen, die jeweils gemeinsam oder individuell durch die Steuereinrichtung angesteuert werden können. Dadurch kann der Kühlluftstrom bedarfsweise an den Stellen erzeugt werden, an denen eine Kühlung erforderlich ist.

Die Ansteuerung ermöglicht wenigstens ein Ein- oder Ausschalten der Lüftereinrichtung. Ebenso ist es auch möglich, eine Lüfterdrehzahl einzustellen bzw. zu regeln.

Weiterhin wird eine Arbeitsmaschine angegeben, mit einer Arbeitsvorrichtung zum Erzeugen einer Arbeitsbewegung, einem Elektromotor zum Antreiben der Arbeitsvorrichtung, einem elektrischen Energiespeicher zum Versorgen des Elektromotors mit elektrischem Strom, einer Motorschalteinrichtung zum Ein- und Ausschalten des Elektromotors durch einen Bediener, einer durch den Bediener betätigbaren Bedieneinrichtung, zum Aktivieren und Deaktivieren des Energiespeichers, und mit einer Steuereinrichtung zum Deaktivieren des Energiespeichers in Abhängigkeit von einem Arbeitszustand der Arbeitsmaschine, wobei der Arbeitszustand ausgewählt ist aus der Gruppe: Ablauf einer vorgegebenen ersten Zeitspanne nach Aktivieren des Energiespeichers durch die Bedieneinrichtung, ohne dass der Elektromotor durch die Motorschalteinrichtung eingeschaltet wurde; Ablauf einer vorgegebenen zweiten Zeitspanne nach Ausschalten des Elektromotors durch die Motorschalteinrichtung.

Bei akkubetriebenen Arbeitsmaschinen hat es sich durchgesetzt, dass der eingesetzte Energiespeicher (Akku) zunächst durch Betätigen einer Bedieneinrichtung (z.B. Taste oder Schalter) aktiviert werden muss. Erst dann gibt der Akku bzw. eine am Akku vorgesehene Steuerung den elektrischen Strom frei. Wenn der Akku aktiviert wurde, befindet er sich in einem Standby-Zustand, so dass seine elektrische Energie genutzt werden kann.

Mit dem Aktivieren des Akkus ist die erste Zeitspanne vorgegeben, innerhalb von der der Arbeitsbetrieb durch Einschalten des Elektromotors aufgenommen werden soll bzw. kann. Wenn während dieser ersten Zeitspanne kein Starten des Elektromotors erfolgt, wird der Akku wieder deaktiviert.

Wenn nach einem Arbeitsbetrieb der Motor wieder abgeschaltet wurde, wird das Verstreichen einer zweiten Zeitspanne überwacht. Wenn diese zweite Zeitspanne abgelaufen ist, ohne dass eine weitere Aktivität wie z.B. das Einschalten des Elektromotors erfolgt, deaktiviert die Steuereinrichtung den Akku.

Bei der Arbeitsmaschine kann eine Kühlvorrichtung zum Kühlen des Energiespeichers vorgesehen sein, wobei die Kühlvorrichtung wenigstens eine Lüftereinrichtung aufweist, zum Erzeugen eines Kühlluftstroms, der über den Energiespeicher führbar ist, wobei wenigstens ein Temperatursensor zum Erfassen einer Temperatur vorgesehen ist, und wobei die Steuereinrichtung ausgebildet ist, zum Ansteuern der Lüftereinrichtung in Abhängigkeit von der durch den Temperatursensor erfassten Temperatur.

Wie bei der oben beschriebenen Ausführungsform kann die Steuereinrichtung die Messwerte des Temperatursensors auswerten und z.B. mit Temperaturgrenzwerten vergleichen, um entsprechend die Lüftereinrichtung anzusteuern.

Es kann ein Umformer vorgesehen sein, zum Umformen des Stroms aus dem Energiespeicher und Zuführen des Stroms zu dem Elektromotor, wobei die Kühlvorrichtung zusätzlich zum Kühlen des Energiespeichers auch zum Kühlen des Umformers vorgesehen sein kann, wobei der Kühlluftstrom über die Umformereinrichtung führbar sein kann.

Je nach Ausgestaltung kann dabei der Kühlluftstrom zwischen dem Energiespeicher und der Umformereinrichtung geführt werden. Beispielsweise kann der Lüfter im Kühlluftstrom zwischen dem Energiespeicher und der Umformereinrichtung angeordnet sein. Der Kühlluftstrom kann dementsprechend zunächst den Energiespeicher und danach die Umformereinrichtung kühlen, wenn er entsprechend an den Komponenten vorbeigeführt wird.

Es kann ein Temperatursensor zum Erfassen von wenigstens einer Temperatur an der Arbeitsmaschine vorgesehen sein, ausgewählt aus der Gruppe Temperatur des Energiespeichers, Temperatur des Umformers, Temperatur des Elektromotors, Umgebungstemperatur, Temperatur an einem Lufteinlass eines zum Führen des Kühlluftstroms vorgesehenen Kühlluftkanals, Temperatur an einem Auslass des Kühlluftkanals.

Somit können an der Arbeitsmaschine wenigstens ein Temperatursensor, gegebenenfalls aber auch mehrere Temperatursensoren an verschiedenen Stellen bzw. Komponenten vorgesehen seien. Die jeweiligen von den Temperatursensoren erfassten Temperaturmesswerte werden an die Steuereinrichtung geliefert, die entsprechende Maßnahmen ergreift, wie z.B. das Ein- oder Ausschalten oder auch Hoch- bzw. Runterregeln der Lüftereinrichtung.

Ein Temperatursensor kann dabei an dem Energiespeicher und/oder an dem Umformer vorgesehen ist.

In der Steuereinrichtung kann ein Temperaturgrenzwert hinterlegt sein, wobei durch die Steuereinrichtung die erfasste Temperatur mit dem Temperaturgrenzwert vergleichbar sein kann, und wobei, wenn ein Überschreiten des Temperaturgrenzwerts durch die erfasste Temperatur festgestellt wird, die Steuereinrichtung die Lüftereinrichtung einschaltet.

Die Steuereinrichtung kann ausgebildet sein, zum Ansteuern der Lüftereinrichtung in Abhängigkeit von der durch den Temperatursensor erfassten Temperatur und in Abhängigkeit von einem Betriebszustand der Arbeitsmaschine. Wenn mehrere Temperatursensoren vorhanden sind, kann die Steuereinrichtung die Lüftereinrichtung (oder die mehreren Lüftereinrichtungen) auch in Abhängigkeit von den mehreren Temperaturen ansteuern, die von den mehreren Temperatursensoren erfasst werden.

Der Betriebszustand der Arbeitsmaschine kann ausgewählt sein aus der Gruppe: Energiespeicher ausgeschaltet, Energiespeicher eingeschaltet, Elektromotor eingeschaltet. Je nach Betriebszustand ergreift die Steuereinrichtung Maßnahmen und schaltet die Lüftereinrichtung z.B. ein oder aus, unter Berücksichtigung der erfassten Temperaturen.

Die Steuereinrichtung kann ausgebildet sein, zum Ansteuern der Lüftereinrichtung in Abhängigkeit von der durch den Temperatursensor erfassten Temperatur und in Abhängigkeit von dem Arbeitszustand der Arbeitsmaschine derart, dass die Lüftereinrichtung auch in der ersten Zeitspanne und/oder in der zweiten Zeitspanne aktiviert wird, wenn die erfasste Temperatur oberhalb eines vorgegebenen Temperaturgrenzwerts liegt.

Das Kriterium des Arbeitszustands bezieht sich - wie oben erläutert - auf den Ablauf einer vorgegebenen ersten Zeitspanne oder zweiten Zeitspanne vor dem Einschalten des Elektromotors (Antriebsmotor) oder nach dem Ausschalten des Elektromotors. In diesen Zeitphasen kann z.B. der Energiespeicher durch Aktivieren der Lüftereinrichtung gekühlt werden, auch wenn der Elektromotor selbst nicht eingeschaltet ist. Dies erlaubt, dass z.B. ein Energiespeicher, der kurz vor seinem Einsatz geladen wurde und durch den Ladevorgang noch eine hohe Temperatur aufweist, noch in der Standby-Phase (erste Zeitspanne) bereits gekühlt wird, bevor der zum Einsatz kommt, um den Elektromotor mit elektrischer Energie zu versorgen.

Ebenso kann der Energiespeicher auch nach Abschalten des Elektromotors noch gekühlt werden, wenn seine erfasste Temperatur oberhalb des vorgegebenen Temperaturgrenzwerts liegt.

Die Steuereinrichtung kann ausgebildet sein, zum Ansteuern der Lüftereinrichtung in Abhängigkeit von wenigstens einem der folgenden Parameter: Ladezustand des Energiespeichers, Alterungszustand des Energiespeichers, vom Energiespeicher bereitgestellte Spannung, Modelltyp des Energiespeichers. Das bedeutet, dass die Steuereinrichtung über die reinen Temperaturwerte, insbesondere über die Temperatur des Energiespeichers, hinaus auch noch zusätzliche weitere Parameter berücksichtigen kann, die Einfluss auf die Aktivität der Lüftereinrichtung haben kann. Gegebenenfalls kann dafür eine Kernfeldsteuerung festgelegt werden, in der die verschiedenen Parameter abgebildet sind, im Zusammenhang mit den jeweiligen Konsequenzen (Lüftung ein, Lüftung aus, Stärke des Kühlluftstroms). In der Steuereinrichtung kann ein maximaler Temperaturgrenzwert hinterlegt sein, der als oberer Grenzwert für einen Betrieb des Energiespeichers vorgegeben ist, wobei die Temperatur in dem Energiespeicher durch einen Temperatursensor erfasst wird, wobei durch die Steuereinrichtung die erfasste Temperatur mit dem maximalen Temperaturgrenzwert vergleichbar ist, und wobei, wenn ein Überschreiten des maximalen Temperaturgrenzwerts durch die erfasste Temperatur festgestellt wird, die Steuereinrichtung den Elektromotor abschaltet oder ein Einschalten des Elektromotors unterbindet.

In diesem Fall wird überwacht, dass die Temperatur im Energiespeicher nicht den maximalen Temperaturgrenzwert überschreitet. Wenn das jedoch der Fall ist, darf der Energiespeicher nicht weiter belastet werden, um eine Schädigung zu vermeiden. In diesem Fall wird der Antriebsmotor der Arbeitsmaschine unmittelbar durch die Steuereinrichtung abgeschaltet bzw. ein Einschalten des Motors verhindert. In diesem Betriebszustand kann lediglich noch Strom für den Betrieb der Lüftungseinrichtung aus dem Energiespeicher entnommen werden.

Die Steuereinrichtung kann in eine Steuerung des Umformers integriert sein. Der Umformer weist ohnehin elektronische Komponenten auf, so dass an dieser Stelle auch weitere elektronische Komponenten angeordnet sein können, die für die Steuereinrichtung erforderlich sind.

Es wird ein Verfahren zum Vor-Konditionieren eines Energiespeichers an einer Arbeitsmaschine angegeben, mit den Schritten
- Aktivieren des Energiespeichers durch einen Bediener;
- Vorgeben einer ersten Zeitspanne nach dem Aktivieren, innerhalb der ein als Antriebsmotor der Arbeitsmaschine dienender Elektromotor gestartet werden kann;
- Deaktivieren des Energiespeichers, wenn der Elektromotor nicht innerhalb der ersten Zeitspanne gestartet wurde; und
- während der ersten Zeitspanne Überwachen einer Temperatur des Energiespeichers und Aktivieren einer Lüftereinrichtung zum Erzeugen eines Kühlluftstroms für den Energiespeicher, wenn die Temperatur des Energiespeichers über einem vorgegebenen Temperaturgrenzwert liegt.

Weiterhin wird ein Verfahren zum Nach-Konditionieren eines Energiespeichers an einer Arbeitsmaschine angegeben, mit den Schritten
- Ausschalten eines als Antriebsmotor der Arbeitsmaschine dienenden Elektromotors, der von einem aktivierten Energiespeicher mit elektrischer Energie versorgt wird;
- Vorgeben einer zweiten Zeitspanne, die mit dem Ausschalten des Elektromotors beginnt;
- während der zweiten Zeitspanne Beibehalten des Aktivierungszustands des Energiespeichers; und
- während der zweiten Zeitspanne Überwachen einer Temperatur des Energiespeichers und Aktivieren einer Lüftereinrichtung zum Erzeugen eines Kühlluftstroms für den Energiespeicher, wenn die Temperatur des Energiespeichers über einem vorgegebenen Temperaturgrenzwert liegt.

Nach Ablauf der zweiten Zeitspanne kann der Energiespeicher deaktiviert werden.

Diese und weitere Vorteile und Merkmale der Erfindung werden nachfolgend anhand von Beispielen unter Zuhilfenahme der begleitenden Figuren näher erläutert. Es zeigen:
- **Fig. 1**: in schematischer Seitenansicht ein Rüttelstampfer als Beispiel für eine erfindungsgemäße Arbeitsmaschine;
- **Fig. 2**: in schematischer Seitenansicht eine Rüttelplatte als Beispiel für eine erfindungsgemäße Arbeitsmaschine;
- **Fig. 3**: den prinzipiellen Aufbau einer Kühlvorrichtung mit bedarfsorientierter Steuerung;
- **Fig. 4**: Steuerungssituationen zum Ansteuern der Kühlvorrichtung in Abhängigkeit von unterschiedlichen Arbeits- und Betriebszuständen; und
- **Fig. 5**: ein Ablaufdiagramm zur Erläuterung der Vor- und Nachkonditionierung.

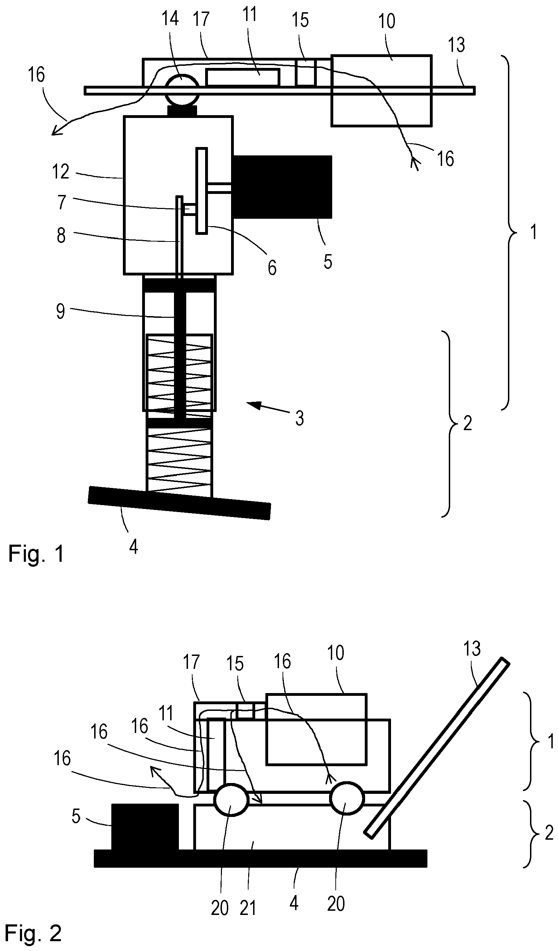

Die Fig. 1 und 2 zeigen exemplarisch jeweils eine Arbeitsmaschine mit Kühlung eines Akkus und eines Umformers. Bei den gezeigten Beispielen wird - wie später noch erläutert wird - ein Kühlluftstrom erzeugt, der über den Akku und den Umformer geführt wird, um die beiden Komponenten zu kühlen. Die Erfindung lässt sich aber auch bei anderen Kühlkonzepten, insbesondere bei anderen Verläufen von Kühlluftströmen anwenden.

Fig. 1 zeigt schematisch einen Rüttel- bzw. Vibrationsstampfer, mit einer Obermasse 1 und einer relativ zu der Obermasse 1 bewegliche Untermasse 2. Die Obermasse 1 und die Untermasse 2 sind durch eine an sich bekannte Federeinrichtung 3 miteinander gekoppelt. An der Unterseite der Untermasse 2 ist eine Bodenkontaktplatte 4 zur Bodenverdichtung vorgesehen.

An der Obermasse 1 ist ein Antrieb mit einem Elektromotor 5 vorgesehen, der ein Kurbelrad 6 drehend antreibt, das über einen Kurbelzapfen 7 mit einem Pleuel 8 gekoppelt ist. Das Pleuel 8 ist mit einem Stampfkolben 9 verbunden, so dass die Drehbewegung des Kurbelrads 6 in eine Hin- und Herbewegung des Stampfkolbens 9 gewandelt wird. Die lineare Bewegung des Stampfkolbens 9 wird dann schließlich über die Federeinrichtung 3 auf die Bodenkontaktplatte 4 übertragen, die die eigentliche Stampfbewegung ausführt.

Zur Energieversorgung des Elektromotors 5 ist ein als elektrischer Energiespeicher dienender Akku 10 vorgesehen.

Der vom Akku 10 bereitgestellte elektrische Strom wird von einem als Umformereinrichtung dienenden Umformer 11 hinsichtlich seiner Spannung und seiner Frequenz in einen für den Elektromotor 5 geeigneten Strom gewandelt bzw. umgeformt. Insbesondere kann es dabei möglich sein, aus dem im Akku 10 gespeicherten Gleichstrom einen Wechselstrom für den Elektromotor 5 zu erzeugen.

Das Kurbelrad 6, der Kurbelzapfen 7 und das Pleuel 8 sind in einem Kurbelgehäuse 12 untergebracht, an dem auch der Elektromotor 5 befestigt ist. Bei einer Variante kann der Elektromotor 5 auch weitgehend im Inneren des Kurbelgehäuses 12 angeordnet sein.

An der Oberseite des Kurbelgehäuses 12 ist eine zu der Obermasse 1 gehörende, als Griffbügel ausgebildete Griffeinrichtung 13 angebracht. Zur Schwingungsentkopplung der Griffeinrichtung 13 ist zwischen der Griffeinrichtung 13 und dem Kurbelgehäuse 12 eine Schwingungsentkopplungseinrichtung 14, z.B. in Form von Gummipuffern, angeordnet. Dadurch ist die Griffeinrichtung 13 in gewissen Grenzen relativ zu der restlichen Obermasse 1, insbesondere relativ zum Kurbelgehäuse 12 verschwenkbar, um einen Bediener, der den Griffbügel bzw. die Griffeinrichtung 13 bestimmungsgemäß am in Fig. 1 rechten Ende greift, vor der Einwirkung übermäßig starker Schwingungen zu schützen.

Sowohl der Akku 10 als auch der Umformer 11 sind an der Griffeinrichtung 13 befestigt bzw. werden von dieser getragen. Dabei ist es möglich, dass der Akku 10 wechselbar an der Griffeinrichtung 13 befestigt ist, so dass er jeweils durch einen frischen Akku 10 ersetzt werden kann.

Räumlich zwischen dem Akku 10 und dem Umformer 11 ist eine Lüftereinrichtung 15 angeordnet, die einen Lüfter, z.B. einen Ventilator, und einen Lüftermotor aufweist.

Die Lüftereinrichtung 15 erzeugt einen Kühlluftstrom 16, indem sie Luft über den Akku 10 einsaugt und stromab über den Umformer 11 drückt, bis der Kühlluftstrom 16 wieder in die Umgebung gelangt. Der Verlauf des Kühlluftstroms 16 ist in Fig. 1 symbolhaft durch einen Pfeil dargestellt.

Zur besseren Führung des Kühlluftstroms 16 sowie zum Schutz der verschiedenen Komponenten ist eine Abdeckung 17, z.B. eine Kunststoffhaube, vorgesehen.

Bei einer nicht dargestellten Variante kann die Lüftereinrichtung 15 auch stromauf von dem Akku 10 oder stromab von dem Umformer 11 angeordnet sein, um den Kühlluftstrom 16 (vgl. Pfeilrichtung) in geeigneter Weise zu erzeugen.

Fig. 2 zeigt eine andere Ausführungsform der Arbeitsmaschine als Rüttel- bzw. Vibrationsplatte. Funktional ähnliche oder identische Komponenten wie bei der Ausführungsform von Fig. 1 werden mit gleichen Bezugszeichen bezeichnet.

Demgemäß weist die Vibrationsplatte ebenfalls eine Obermasse 1 und eine Untermasse 2 auf, wobei die Untermasse 2 relativ zu der Obermasse 1 beweglich ist. Dazu sind Schwingungsentkopplungselemente 20 zwischen der Obermasse 1 und der Untermasse 2 vorgesehen.

An der Untermasse 2 ist eine Bodenkontaktplatte 4 ausgebildet. Auf der Bodenkontaktplatte 4 ist der Elektromotor 5 angeordnet, der einen Schwingungserreger 21 antreibt. Der Schwingungserreger 21 kann z.B. eine oder mehrere Unwuchtwellen aufweisen, die durch den als Antriebsmotor dienenden Elektromotor 5 in Rotation versetzt werden, um die gewünschten Schwingungen zu erzeugen. Die Schwingungen werden dann über die Bodenkontaktplatte 4 direkt in den zu verdichtenden Boden eingeleitet.

Der die Energie für den Elektromotor 5 bereitstellende Akku 10 ist an der Obermasse 1 angeordnet, zusammen mit dem Umformer 11.

Wie bei der Ausführungsform von Fig. 1 ist zwischen dem Akku 10 und dem Umformer 11 die Lüftereinrichtung 15 angeordnet, um den Kühlluftstrom 16 durch den Akku 10 und entlang dem Umformer 11 zu bewirken. Wie erkennbar, kann der Kühlluftstrom 16 stromab von der Lüftereinrichtung 15 derart geführt, dass der Umformer 11 möglichst allseitig bzw. wenigstens beidseitig von Kühlluftstrom 16 umströmt wird. Je nach Ausgestaltung genügt aber auch die Kühlwirkung, wenn der Akku 10 und/oder Umformer 11 nur einseitig beströmt werden.

Zur verbesserten Führung des Kühlluftstroms 16 ist die Abdeckung 17 vorgesehen.

Die Griffeinrichtung 13 ist bei der Vibrationsplatte in Form einer durch einen Bediener führbaren Deichsel ausgebildet, die an der Untermasse 2 befestigt ist.

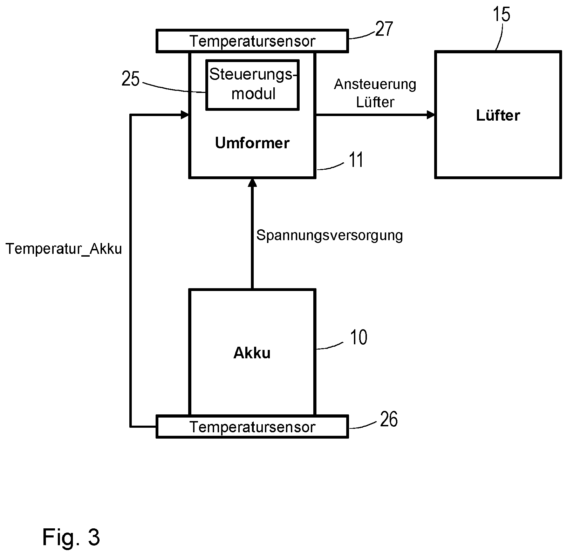

Fig. 3 zeigt den schematischen Aufbau einer erfindungsgemäßen Kühlvorrichtung zum Realisieren einer bedarfsorientierten Kühlung, die z.B. in einer der in den Fig. 1 oder 2 gezeigten Arbeitsmaschinen zum Einsatz kommen kann.

Der Akku 10 dient dabei zur Spannungsversorgung des Umformers 11. Als Bestandteil des Umformers 11 ist auch ein als Steuereinrichtung dienendes Steuerungsmodul 25 vorgesehen. Das Steuerungsmodul 25 kann integraler Bestandteil des Umformers 11 sein. Es kann aber auch separat von dem Umformer 11, z.B. in einem anderen Bereich der Arbeitsmaschine angeordnet sein. Die Anordnung des Steuerungsmoduls 25 am bzw. im Umformer 11 bietet sich jedoch an, weil bereits für den Umformer empfindliche elektronische Bauteile vorgesehen sind, die entsprechend gegen Schwingungen, Verschmutzung und das Eindringen von Feuchtigkeit geschützt sind. Durch die Integration des Steuerungsmoduls 25 in dem Umformer 11 kann somit zusätzlicher Aufwand vermieden werden, der sonst durch entsprechende zusätzliche Schutzmaßnahmen für das Steuerungsmodul 25 erforderlich wären.

Das Steuerungsmodul 25 steuert den Lüfter 15 an. Insbesondere kann das Steuerungsmodul 25 den Lüfter 15 ein- und ausschalten. Ebenso ist es möglich, dass das Steuerungsmodul 25 ausgebildet ist, um die Drehzahl des Lüfters bedarfsweise zu verändern.

Zur Überwachung des Kühlbedarfs ist an dem Akku 10 ein Temperatursensor 26 und an dem Umformer 11 ein Temperatursensor 27 vorgesehen. Die Temperatursensoren 26, 27 können an den Außen- bzw. Gehäusewänden von Akku 10 und Umformer 11 angeordnet sein. Sie können aber auch in das Innere der Gehäuse integriert werden, wenn dies baulich möglich ist.

Die Messergebnisse der Temperatursensoren 26, 27 werden dem Steuerungsmodul 25 zugeführt, das die Messergebnisse mit vorgegebenen Kennfeldern oder Grenzwerten vergleicht. Je nach erkannter Situation, insbesondere bei einem Über- oder Unterschreiten eines vorgegebenen Temperaturgrenzwerts, steuert das Steuerungsmodul 25 den Lüfter 15 an, um einen Kühlluftstrom zu erzeugen oder abzuschalten bzw. zu verstärken oder abzuschwächen.

In der Arbeitsmaschine können noch weitere Temperatursensoren an geeigneten Stellen vorgesehen sein, um Informationen für das Steuerungsmodul 25 bereitzustellen, die eine bedarfsweise Kühlung unterstützen. Zu diesen Informationen gehören z.B. die Außentemperatur, die Temperatur in einem Kurbelwerk (Rüttelstampfer) oder einem Schwingungserreger (Rüttelplatte) oder die Temperatur in einem Antriebsmotor (z.B. Elektromotor 5).

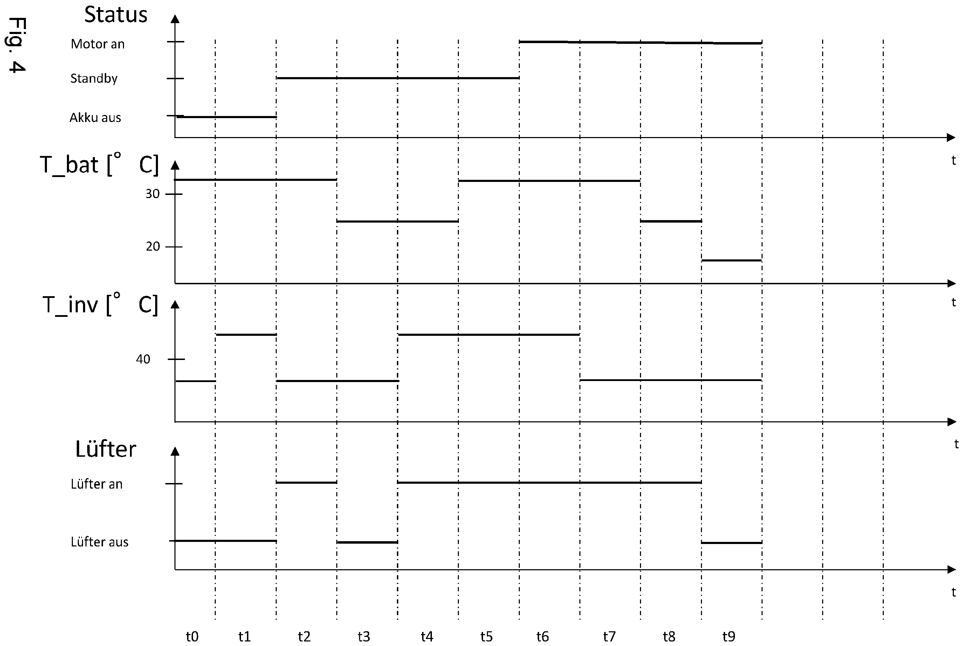

Fig. 4 zeigt beispielhaft verschiedene Parameter und deren Entwicklung über die Zeit t. Insbesondere werden dabei verschiedene Betriebs- und Schaltzustände dargestellt, um die Arbeitsweise der bedarfsorientierten Kühlung zu erläutern.

In der oberen Zeile wird der Status der Arbeitsmaschine gezeigt, mit den unterschiedlichen Zuständen "Akku aus", "Standby" und "Motor an".

Im Zustand "Akku aus" ist der Akku deaktiviert und liefert keine Spannung.

Im Zustand "Standby" wurde der Akku 10 vom Bediener durch Betätigen eines entsprechenden Bedienelements, z.B. eines Tasters, aktiviert und befindet sich dementsprechend im Standby-Modus. In diesem Zustand stellt der Akku elektrische Spannung für den Betrieb der Arbeitsmaschine zur Verfügung.

Im Zustand "Motor an" ist der Antriebsmotor 5 der Arbeitsmaschine aktiviert und die Arbeitsmaschine kann die bestimmungsgemäß vorgesehene Arbeit, z.B. die Verdichtung des Bodens durch einen Rüttelstampfer oder eine Rüttelplatte, durchführen.

In der darunterliegenden Zeile von Fig. 4 sind beispielhaft Temperaturwerte T_bat am Akku 10 dargestellt, die von dem Temperatursensor 26 erfasst werden. Die Temperaturwerte springen in dem gezeigten Beispiel zwischen ca. 33°C (Temperatur für Akku 10 zu hoch), 25°C (optimale Betriebstemperatur für den Akku 10, sogenannte "Wohlfühltemperatur") und 17°C (Temperatur niedrig). Diese Temperaturwerte sind jedoch nur beispielhaft angegeben. Selbstverständlich können in der Praxis je nach Akkutyp auch andere Werte im Betrieb der Arbeitsmaschine gemessen werden.

Analog zu den Temperaturwerten am Akku 10 werden in Fig. 4 in der Zeile darunter gemessene Temperaturwerte T_inv am Umformer 11 dargestellt. Hier springen die Temperaturwerte auf Werte unterhalb von 40°C und oberhalb von 40°C.

In der unteren Zeile von Fig. 4 werden die Schaltstellungen des Lüfters 15 dargestellt, nämlich "Lüfter an" oder "Lüfter aus".

Daraus ergeben sich in Fig. 4 beispielhaft folgende Schaltzustände zu unterschiedlichen Zeitspannen t0 bis t9:
t0: Akku aus (liefert keinen Strom), Temperatur am Akku (T_bat) zu hoch, Temperatur am Umformer (T_inv) niedrig. Lüfter ist ausgeschaltet, weil der Akku 10 keine Spannung liefert.
t1: Ähnliche Situation wie bei t0. Zusätzlich ist die Temperatur am Umformer T_inv hoch. Der Akku liefert keinen Strom, der Lüfter bleibt aus.
t2: Der Bediener hat den Akku 10 aktiviert, so dass dieser sich im Standby befindet. Die Temperaturwerte entsprechen denen von t0. Da jetzt jedoch elektrische Spannung vom Akku 10 zur Verfügung steht, wird der Lüfter angeschaltet.
t3: Alle Temperaturwerte sind im optimalen Bereich. Der Lüfter ist aus.
t4: Ähnliche Situation wie bei t3, aber die Temperatur am Umformer T_inv ist hoch. Daher ist der Lüfter an.
t5: Beide Temperaturwerte T_bat und T_inv sind hoch, der Lüfter ist an.
t6: Der Motor ist gestartet und im Betrieb. Die Temperaturwerte sind hoch, der Lüfter ist an.
t7: Der Temperaturwert des Akkus T_bat ist hoch, der Lüfter ist an.
t8: Beide Temperaturwerte sind niedrig. Da aber kurz vorher bei t7 der Temperaturwert des Akkus hoch war, wird die Kühlung fortgeführt und der Lüfter bleibt an.
t9: Die Temperatur des Akkus T_bat ist sehr niedrig. Eine Kühlung ist nicht mehr erforderlich und könnte sogar - bei niedriger Umgebungstemperatur - eher nachteilig sein. Die Lüftung ist aus.

Zusammengefasst kann gesagt werden, wenn der Akku 10 ausgeschaltet ist, ist der Lüfter 15 immer aus. Wenn sich der Akku 10 im Standby befindet und die Batterietemperatur T_bat hoch (z.B. > 30°C) ist, ist der Lüfter 15 immer an. Wenn der Motor (Elektromotor 5) eingeschaltet ist, und die Akkutemperatur T_bat > 20°C oder die Umformertemperatur T_inv > 40°C ist, ist der Lüfter an.

Die Kühlung erfolgt erst, sobald der Akku 10 aktiviert ist, um eine Tiefenentladung zu vermeiden.

Im Einsatz von Arbeitsmaschinen, insbesondere in ihrer Ausprägung als Baumaschinen, besteht häufig die Möglichkeit, dass der Akku noch vor Inbetriebnahme der Maschine eine zu hohe Temperatur aufweist. Das kann daran liegen, dass der Akku z.B. in der Sonne gelagert wurde oder kurz vor Beginn des Einsatzes geladen wurde. Ebenso kann die Akkutemperatur nach Abschalten der Maschine hoch sein, weil der Akku vorher durch Einsatz des Antriebsmotors stark belastet wurde.

Zu diesem Zweck ist ein Konditionierungsverfahren vorgesehen, mit dem der Akku 10 vor und nach dem Betrieb der Maschine aktiv bleibt und dementsprechend auch bei Bedarf noch gekühlt werden kann. Dabei kann auch vorgesehen werden, dass die Maschine erst dann eingeschaltet werden darf, wenn die Akkutemperatur in einem günstigen Bereich liegt. Bei Übertemperatur kann die Maschine dementsprechend nicht gestartet werden.

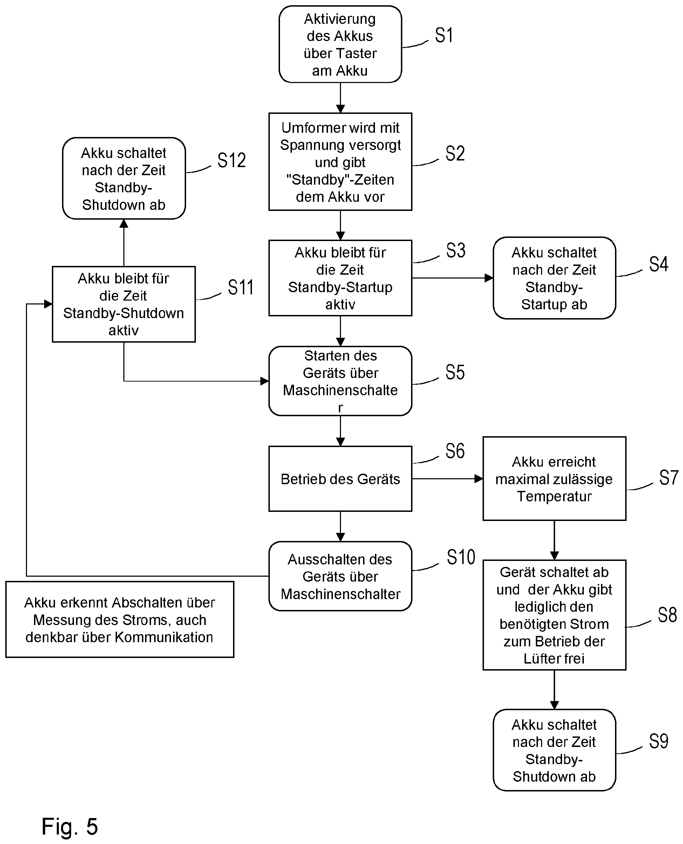

Fig. 5 zeigt ein Beispiel für die Funktionsschritte des Konditionierungsverfahrens.

In Schritt S1 wird der Akku durch Betätigen eines am Akku vorgesehenen Tasters aktiviert. Ab dann stellt der Akku eine elektrische Spannung zur Verfügung, die von der Arbeitsmaschine genutzt werden kann.

Insbesondere wird in Schritt S2 der Umformer bzw. das dort vorgesehene Steuerungsmodul mit Spannung versorgt und gibt sogenannte "Standby"-Zeiten bzw. - Zeitspannen (erste Zeitspanne) für den Akku vor.

In Schritt S3 bleibt der Akku für die vorgegebene Zeit "Standby-Startup" aktiv.

Sofern der Bediener keine weiteren Maßnahmen einleitet, schaltet der Akku im Schritt S4 nach Ablauf der Zeitspanne "Standby-Startup" ab.

Wenn der Bediener jedoch im Schritt S5 die Arbeitsmaschine über einen im Bedienbereich vorgesehenen Maschinenschalter einschaltet und dabei insbesondere z.B. den Antriebsmotor des Geräts aktiviert, ist in Schritt S6 der Betrieb des Geräts möglich.

Parallel dazu läuft die Überwachung der Temperatur entsprechend der oben erläuterten Fig. 3. Wenn demnach das Steuerungsmodul 25 in Schritt S7 erkennt, dass der Akku seine maximal zulässige Temperatur erreicht hat, schaltet das Steuerungsmodul den Antriebsmotor in Schritt S8 ab. Der Akku kann dann lediglich noch den zum Betrieb der Lüftereinrichtung 15 benötigten Strom liefern, damit der Akku weiterhin gekühlt werden kann.

Nach Ablauf der vorgegebenen Zeit "Standby-Shutdown" (zweite Zeitspanne) schaltet sich der Akku in Schritt S9 ab.

Wenn während des Betriebs des Geräts im Schritt S6 kein Überschreiten der Ackutemperatur (Schritt S7) festgestellt wird, kann das Gerät nach Beendigung der Arbeit durch Betätigen des Maschinenschalters in Schritt S10 abgeschaltet werden.

Der Akku erkennt das Abschalten des Geräts dadurch, dass kein Strom mehr bezogen wird. Ergänzend oder alternativ ist es auch möglich, dass zwischen der Motorsteuerung oder dem Motorschalter einerseits und dem Akku andererseits ein Informationsaustausch stattfindet und der Akku auf diese Weise die Information erhält, dass der Motor abgeschaltet wurde.

Nach Abschalten des Geräts in Schritt S 10 bleibt der Akku noch im Schritt S11 für die Zeit "Standby-Shutdown" (zweite Zeitspanne) aktiv. In dieser Phase kann der Akku somit weiter gekühlt werden.

In Schritt S12 schaltet der Akku nach Ablauf der Zeit "Standby-Shutdown" ab. Eine aktive Kühlung des Akkus erfolgt dann nicht mehr, weil der Lüfter nicht mehr mit Strom versorgt wird.

Die Zeit, wie lange der Akku im Ruhezustand (Standby) nach Abschalten des Geräts bleiben soll, bevor er sich selbst wieder ausschaltet, kann z.B. bei 3 oder 5 Minuten liegen. In dieser Zeitspanne kann der Bediener das Gerät durch Betätigen des Maschinenschalters wieder einschalten und den Arbeitsbetrieb fortsetzen, ohne dass der Akku erneut aktiviert werden muss. Bei anderen Geräten kann es sein, dass ein Wiederaufnehmen des Betriebs unwahrscheinlich ist. Daher muss der Akku in diesem Fall nicht für längere Zeit aktiv bleiben, so dass sich der Akku nach einer kürzeren Mindestzeit (z.B. 30 Sekunden) wieder ausschaltet, wenn zwischenzeitlich kein neuer Start des Geräts erfolgt ist.

Durch die oben erläuterte bedarfsorientierte Kühlung kann die Kühlvorrichtung im Vergleich zu aktiven Lüftern, die nicht spezifisch angesteuert werden, energieeffizienter gestaltet werden, da die Lüfter nicht dauerhaft laufen müssen.

Durch die bedarfsorientierte Kühlung der Komponenten kann die maximal mögliche Laufzeit verlängert werden, da das Delta der vorliegenden Temperatur zur maximal zulässigen Temperatur bei den betreffenden Komponenten, insbesondere beim Akku, durch die Vor- und Nachkonditionierung erhöht wird. Z.B. erlaubt die Vorkühlung des Akkus, dass er danach länger in Betrieb bleiben kann, bis seine Temperatur die maximal zulässige Grenztemperatur überschritten hat.

Durch den Betrieb der Komponenten bei ihren Wohlfühltemperaturen kann die Lebensdauer der Zellen des Akkus und der elektronischen Bauteile im Umformer verlängert werden.

Das anhand von Fig. 5 erläuterte Ein- und Ausschaltkonzept ermöglicht es, bei kurzen Pausen die Maschine einfacher und schneller zu starten. Insbesondere muss der Bediener nicht immer wieder vor jedem Start der Maschine den Akku aktivieren.

## Patentansprüche

1. Arbeitsmaschine, mit
- einer Arbeitsvorrichtung zum Erzeugen einer Arbeitsbewegung;
- einem Elektromotor (5) zum Antreiben der Arbeitsvorrichtung;
- einem elektrischen Energiespeicher (10) zum Versorgen des Elektromotors mit elektrischem Strom; und mit
- einer Kühlvorrichtung zum Kühlen des Energiespeichers (10);
wobei
- die Kühlvorrichtung wenigstens eine Lüftereinrichtung (15) aufweist, zum Erzeugen eines Kühlluftstroms (16), der über den Energiespeicher (10) führbar ist;
- wenigstens ein Temperatursensor (26) zum Erfassen einer Temperatur vorgesehen ist; und wobei
- eine Steuereinrichtung (25) vorgesehen ist, zum Ansteuern der Lüftereinrichtung (15) in Abhängigkeit von der durch den Temperatursensor (26) erfassten Temperatur.

2. Arbeitsmaschine, mit
- einer Arbeitsvorrichtung zum Erzeugen einer Arbeitsbewegung;
- einem Elektromotor (5) zum Antreiben der Arbeitsvorrichtung;
- einem elektrischen Energiespeicher (10) zum Versorgen des Elektromotors (5) mit elektrischem Strom;
- einer Motorschalteinrichtung zum Ein- und Ausschalten des Elektromotors (5) durch einen Bediener;
- einer durch den Bediener betätigbaren Bedieneinrichtung, zum Aktivieren und Deaktivieren des Energiespeichers (10); und mit
- einer Steuereinrichtung (25) zum Deaktivieren des Energiespeichers (5) in Abhängigkeit von einem Arbeitszustand der Arbeitsmaschine;
wobei der Arbeitszustand ausgewählt ist aus der Gruppe:
+ Ablauf einer vorgegebenen ersten Zeitspanne nach Aktivieren des Energiespeichers (10) durch die Bedieneinrichtung, ohne dass der Elektromotor (5) durch die Motorschalteinrichtung eingeschaltet wurde;
+ Ablauf einer vorgegebenen zweiten Zeitspanne nach Ausschalten des Elektromotors 5( durch die Motorschalteinrichtung.

3. Arbeitsmaschine nach Anspruch 2, mit
- einer Kühlvorrichtung zum Kühlen des Energiespeichers (10);
wobei
- die Kühlvorrichtung wenigstens eine Lüftereinrichtung (15) aufweist, zum Erzeugen eines Kühlluftstroms (16), der über den Energiespeicher (10) führbar ist;
- wenigstens ein Temperatursensor (26) zum Erfassen einer Temperatur vorgesehen ist; und wobei
- die Steuereinrichtung (25) ausgebildet ist, zum Ansteuern der Lüftereinrichtung (15) in Abhängigkeit von der durch den Temperatursensor (26) erfassten Temperatur.

4. Arbeitsmaschine nach einem der vorstehenden Ansprüche, wobei
- ein Umformer (11) vorgesehen ist, zum Umformen des Stroms aus dem Energiespeicher (10) und Zuführen des Stroms zu dem Elektromotor (5);
- die Kühlvorrichtung zusätzlich zum Kühlen des Energiespeichers (10) auch zum Kühlen des Umformers (11) vorgesehen ist;
- der Kühlluftstroms (16) über die Umformereinrichtung (11) führbar ist;

5. Arbeitsmaschine nach einem der vorstehenden Ansprüche, wobei ein Temperatursensor (26, 27) zum Erfassen von wenigstens einer Temperatur an der Arbeitsmaschine vorgesehen ist, ausgewählt aus der Gruppe
+ Temperatur des Energiespeichers (10)
+ Temperatur des Umformers (11)
+ Temperatur des Elektromotors (5)
+ Umgebungstemperatur
+ Temperatur an einem Lufteinlass eines zum Führen des Kühlluftstroms vorgesehen Kühlluftkanals
+ Temperatur an einem Auslass des Kühlluftkanals.

6. Arbeitsmaschine nach einem der vorstehenden Ansprüche, wobei
- in der Steuereinrichtung (25) ein Temperaturgrenzwert hinterlegt ist;
- durch die Steuereinrichtung (25) die erfasste Temperatur mit dem Temperaturgrenzwert vergleichbar ist;
- wenn ein Überschreiten des Temperaturgrenzwerts durch die erfasste Temperatur festgestellt wird, die Steuereinrichtung die Lüftereinrichtung (15) einschaltet.

7. Arbeitsmaschine nach einem der vorstehenden Ansprüche, wobei die Steuereinrichtung (15) ausgebildet ist, zum Ansteuern der Lüftereinrichtung (15) in Abhängigkeit von der durch den Temperatursensor (26, 27) erfassten Temperatur und in Abhängigkeit von einem Betriebszustand der Arbeitsmaschine.

8. Arbeitsmaschine nach einem der vorstehenden Ansprüche, wobei der Betriebszustand der Arbeitsmaschine ausgewählt ist aus der Gruppe
- Energiespeicher (10) ausgeschaltet
- Energiespeicher (10) eingeschaltet
- Elektromotor (5) eingeschaltet.

9. Arbeitsmaschine nach einem der vorstehenden Ansprüche, wobei die Steuereinrichtung (25) ausgebildet ist, zum Ansteuern der Lüftereinrichtung (15) in Abhängigkeit von der durch den Temperatursensor (26, 27) erfassten Temperatur und in Abhängigkeit von dem Arbeitszustand der Arbeitsmaschine, derart, dass die Lüftereinrichtung (15) auch in der ersten Zeitspanne und/oder in der zweiten Zeitspanne aktiviert wird, wenn die erfasste Temperatur oberhalb eines vorgegebenen Temperaturgrenzwerts ist.

10. Arbeitsmaschine nach einem der vorstehenden Ansprüche, wobei die Steuereinrichtung (25) ausgebildet ist, zum Ansteuern der Lüftereinrichtung (25) in Abhängigkeit von wenigstens einem der folgenden Parameter:
- Ladezustand des Energiespeichers (10);
- Alterungszustand des Energiespeichers (10);
- vom Energiespeicher (10) bereitgestellte Spannung;
- Modelltyp des Energiespeichers (10).

11. Arbeitsmaschine nach einem der vorstehenden Ansprüche, wobei
- in der Steuereinrichtung (25) ein maximaler Temperaturgrenzwert hinterlegt ist, der als oberer Grenzwert für einen Betrieb des Energiespeichers (10) vorgegeben ist;
- die Temperatur in dem Energiespeicher (10) durch einen Temperatursensor (26) erfasst wird;
- durch die Steuereinrichtung (25) die erfasste Temperatur mit dem maximalen Temperaturgrenzwert vergleichbar ist; und wobei
- wenn ein Überschreiten des maximalen Temperaturgrenzwerts durch die erfasste Temperatur festgestellt wird, die Steuereinrichtung (25) den Elektromotor (5) abschaltet oder ein Einschalten des Elektromotors (5) unterbindet.

12. Arbeitsmaschine nach einem der vorstehenden Ansprüche, wobei die Steuereinrichtung (25) in eine Steuerung des Umformers (11) integriert ist.

13. Verfahren zum Vor-Konditionieren eines Energiespeichers an einer Arbeitsmaschine, mit den Schritten
- Aktivieren des Energiespeichers (10) durch einen Bediener;
- Vorgeben einer ersten Zeitspanne nach dem Aktivieren, innerhalb der ein als Antriebsmotor der Arbeitsmaschine dienender Elektromotor (5) gestartet werden kann;
- Deaktivieren des Energiespeichers (10), wenn der Elektromotor (5) nicht innerhalb der ersten Zeitspanne gestartet wurde; und
- während der ersten Zeitspanne Überwachen einer Temperatur des Energiespeichers (10) und Aktivieren einer Lüftereinrichtung (15) zum Erzeugen eines Kühlluftstroms (16) für den Energiespeicher (15), wenn die Temperatur des Energiespeichers (15) über einem vorgegebenen Temperaturgrenzwert liegt.

14. Verfahren zum Nach-Konditionieren eines Energiespeichers (15) an einer Arbeitsmaschine, mit den Schritten
- Ausschalten eines als Antriebsmotor der Arbeitsmaschine dienenden Elektromotors (5), der von einem aktivierten Energiespeicher (10) mit elektrischer Energie versorgt wird;
- Vorgeben einer zweiten Zeitspanne, die mit dem Ausschalten des Elektromotors (5) beginnt;
- während der zweiten Zeitspanne Beibehalten des Aktivierungszustands des Energiespeichers (10); und
- während der zweiten Zeitspanne Überwachen einer Temperatur des Energiespeichers (10) und Aktivieren einer Lüftereinrichtung (15) zum Erzeugen eines Kühlluftstroms (16) für den Energiespeicher (10), wenn die Temperatur des Energiespeichers (10) über einem vorgegebenen Temperaturgrenzwert liegt.
